(19) Europäisches Patentamt / European Patent Office / Office européen des brevets

(11) **EP 3 081 914 B1**

(12) **EUROPÄISCHE PATENTSCHRIFT**

(45) Veröffentlichungstag und Bekanntmachung des Hinweises auf die Patenterteilung:
**04.07.2018   Patentblatt 2018/27**

(51) Int Cl.:
**G01M 13/02** *(2006.01)*   **G01H 1/00** *(2006.01)*
**G01M 7/00** *(2006.01)*

(21) Anmeldenummer: **15163653.7**

(22) Anmeldetag: **15.04.2015**

(54) **ÜBERWACHUNG EINER MASCHINE MIT EINER ROTIERENDEN MASCHINENKOMPONENTE**

MONITORING OF A MACHINE WITH A ROTATING MACHINE COMPONENT

SURVEILLANCE D'UNE MACHINE DOTÉE D'UN COMPOSANT ROTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.10.2016   Patentblatt 2016/42**

(73) Patentinhaber: **Siemens Aktiengesellschaft**
**80333 München (DE)**

(72) Erfinder: **Ochsenfeld, Henning**
**90461 Nürnberg (DE)**

(56) Entgegenhaltungen:
**EP-A1- 2 626 682      EP-A2- 1 014 054**
**US-A- 5 602 761      US-A1- 2005 119 840**

- TAVNER P J: "Review of condition monitoring of rotating electrical machines", IET ELECTRIC POWER APPLICATIONS,, Bd. 2, Nr. 4, 1. Juli 2008 (2008-07-01), Seiten 215-247, XP006031262, ISSN: 1751-8679, DOI: 10.1049/IET-EPA:20070280
- WANG W J ET AL: "Early detection of gear failure by vibration analysis - I. Calculation of the time-frequency distribution", MECHANICAL SYSTEMS AND SIGNAL PROCESSING, LONDON, GB, Bd. 7, Nr. 3, 1. Mai 1993 (1993-05-01), Seiten 193-203, XP002485748, ISSN: 0888-3270, DOI: 10.1006/MSSP.1993.1008
- BARTELMUS W ET AL: "A new feature for monitoring the condition of gearboxes in non-stationary operating conditions", MECHANICAL SYSTEMS AND SIGNAL PROCESSING, LONDON, GB, Bd. 23, Nr. 5, 1. Juli 2009 (2009-07-01), Seiten 1528-1534, XP026066557, ISSN: 0888-3270, DOI: 10.1016/J.YMSSP.2009.01.014 [gefunden am 2009-02-07]

**Beschreibung**

Die Erfindung betrifft ein Verfahren zur Überwachung einer Maschine mit einer rotierenden Maschinenkomponente.

Im industriellen Umfeld weisen Komponenten von Maschinen mit einer rotierenden Maschinenkomponente, wie z. B. Getriebelager von in Antriebssträngen verbauten Getrieben, nach meist nicht vorhersehbarer Zeit häufig Anomalien auf, die entweder durch natürlichen Verschleiß oder sporadisch auftretende Material- oder Systemfehler bedingt sind. Eine rechtzeitige Erkennung eines derartigen Defekts hat in vielen Anwendungsbereichen hohe Priorität, da die Ersatzbeschaffung bestimmter Bauteile langwierig, der Betriebsausfall kostenintensiv oder der Schaden anderweitig problematisch ist. Aus diesem Grund wird häufig ein Vertrag mit einem Dienstanbieter eines so genannten "Maintenance Service" abgeschlossen, der den Dienstanbieter mit der rechtzeitigen Erkennung von Anomalien und der Einleitung eventueller Wartungsmaßnahmen beauftragt. Derartige Dienste (Maintenance Services) sind derzeit wenig automatisiert und werden daher mit einem entsprechend hohen personellen Aufwand ausgeführt.

US 2005/0119840 A1 offenbart ein Verfahren zum Lokalisieren von Lageranomalien in Maschinen durch die Messung und Auswertung von Maschinenvibrationen.

P. J. Tavner: "Review of condition monitoring of rotating electrical machines", IET Electric Power Applications, 2008, Bd. 2, Nr. 4, S. 215-247 gibt eine Übersicht über bekannte Zustandsüberwachungen rotierender elektrischer Maschinen.

EP 2 626 682 A1 offenbart ein System und ein Verfahren zur Erkennung von Fehlern rotierender Maschinen.

EP 1 014 054 A2 offenbart ein Verfahren zur modellbasierten schwingungsdiagnostischen Überwachung rotierender Maschinen.

W. J. Wang et al: "Early detection of gear failure by vibration analysis - I. Calculation of the time-frequency distribution", Mechanical Systems and Signal Processing (1993) 7 (3), 193-203 betrifft das Erkennen von Getriebefehlern durch eine Vibrationsanalyse.

W. Bartelmus et al: "A new feature for monitoring the condition of gearboxes in non-stationary operating conditions", Mechanical Systems and Signal Processing 23 (2009) 1528-1534 betrifft die Überwachung des Zustands von Getrieben in nicht stationären Betriebsbedingungen.

US 5 602 761 A offenbart ein computerbasiertes Verfahren zur Überwachung und Diagnose anormaler Maschinenzustände.

Der Erfindung liegt die Aufgabe zugrunde, ein verbessertes Verfahren zur Überwachung einer Maschine mit einer rotierenden Maschinenkomponente anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Bei dem erfindungsgemäßen, automatisierten Verfahren zur Überwachung einer Maschine mit einer rotierenden Maschinenkomponente werden zu aufeinander folgenden Messzeiten Parameterwerte von Betriebsparametern der Maschine und jeweils über eine vorgegebene Messdauer Vibrationen der Maschine erfasst. Für jede Messdauer wird ein Vibrationsspektrum von Vibrationsamplituden in Abhängigkeit von Vibrationsfrequenzen der während der Messdauer erfassten Vibrationen ermittelt. Aus dem Vibrationsspektrum wird für mehrere Frequenzbereiche jeweils eine mittlere Leistungsdichte des Vibrationsspektrums ermittelt. Während einer mehrere Messzeiten umfassenden Lernphase wird aus den für diese Messzeiten ermittelten mittleren Leistungsdichten und erfassten Parameterwerten für jeden Frequenzbereich eine Modellfunktion für eine erwartete über den Frequenzbereich gemittelte Leistungsdichte als Funktion der Betriebsparameter ermittelt. Während einer Überwachungsphase wird für jede Messzeit und jeden Frequenzbereich ein Abweichungsmaß für eine Abweichung der aus den erfassten Vibrationen ermittelten mittleren Leistungsdichte von einer erwarteten mittleren Leistungsdichte gebildet. Dabei wird die für eine Messzeit und einen Frequenzbereich erwartete mittlere Leistungsdichte als Funktionswert der in der Lernphase für den Frequenzbereich ermittelten Modellfunktion an der durch die zu der jeweiligen Messzeit erfassten Parameterwerte definierten Stelle gebildet.

Das erfindungsgemäße Verfahren sieht also (wenigstens) eine Lernphase und (wenigstens) eine Überwachungsphase vor. Während der Lernphase werden wiederholt Parameterwerte von Betriebsparametern der Maschine und Vibrationen der Maschine erfasst und daraus für verschiedene Frequenzbereiche jeweils eine Modellfunktion ermittelt, die eine erwartete mittlere Leistungsdichte von Vibrationsamplituden in dem jeweiligen Frequenzbereich als Funktion der Betriebsparameter angibt. In der Überwachungsphase werden ebenfalls Parameterwerte der Betriebsparameter der Maschine und Vibration der Maschine erfasst, und die erfassten Vibrationen werden anhand der in der Lernphase ermittelten Modellfunktionen für jeden Frequenzbereich separat ausgewertet.

Die in der Lernphase ermittelten Modellfunktionen spiegeln maschinenspezifische Eigenschaften der Maschine wider und bilden die Grundlage für die Auswertung der in der Überwachungsphase erfassten Messdaten. Dadurch ist das Verfahren vorteilhaft generisch, d. h. für verschiedene Maschinen, anwendbar, ohne maschinenspezifische Eigenschaften der Maschinen vorher kennen zu müssen, da diese Eigenschaften während der Lernphase automatisiert erlernt werden und sich in den während der Lernphase ermittelten Modellfunktionen niederschlagen.

Die separate Auswertung verschiedener Frequenzbereiche ermöglicht eine qualitativ gute Modellierung mittels einfacher Modellfunktionen, beispielsweise mittels linearer Funktionen der Betriebsparameter, deren Bestimmung nur wenige Messdaten erfordert. Daraus resultiert vorteilhaft eine kurze Lernphase, die problemlos und ohne großen Zeitverlust auch wiederholt werden kann, beispielsweise um wesentliche Veränderungen der Maschine und/oder deren Umgebung zu berücksichtigen.

Insgesamt ermöglicht das Verfahren eine automatisierte Überwachung von Maschinen generischen Typs und reduziert dadurch insbesondere den zur Überwachung der Maschinen erforderlichen personellen Aufwand und die daraus resultierende Fehleranfälligkeit der Überwachung.

Eine Ausgestaltung der Erfindung sieht vor, dass die Maschine ein Getriebe ist.

Diese Ausgestaltung der Erfindung berücksichtigt, dass gerade Getriebe anfällig für das Auftreten verschleiß- und systembedingter Anomalien sind und sich durch die erfindungsgemäße Auswertung von Vibrationsspektren effizient überwachen lassen.

Eine weitere Ausgestaltung der Erfindung sieht vor, dass als Betriebsparameter ein Drehmoment und/oder eine Drehzahl und/oder eine Temperatur einer rotierenden Maschinenkomponente der Maschine verwendet werden.

Diese Ausgestaltung nutzt vorteilhaft aus, dass Drehmomente, Drehzahlen und Temperaturen rotierender Maschinenkomponenten in der Regel an diesen Maschinenkomponenten erfasste Vibrationsspektren in besonders starkem Maße beeinflussen und daher als Betriebsparameter zur Auswertung der Vibrationsspektren besonders relevant und geeignet sind.

Eine weitere Ausgestaltung der Erfindung sieht vor, dass eine Breite der Frequenzbereiche mit zunehmender Vibrationsfrequenz monoton zunimmt.

Die Zunahme der Breite der Frequenzbereiche mit zunehmender Vibrationsfrequenz ist insbesondere dann vorteilhaft, wenn der für die Überwachung der Maschine relevante Informationsgehalt der Vibrationsspektren mit zunehmenden Vibrationsfrequenzen abnimmt, wie dies häufig der Fall ist. Die Erfindung sieht vor, dass die Modellfunktion für jeden Frequenzbereich als eine lineare Funktion der Betriebsparameter ermittelt wird, indem ein lineares multiples Regressionsmodell zur Schätzung der Modellfunktion trainiert wird.

Lineare Funktionen der Betriebsparameter lassen sich vorteilhaft besonders einfach und schnell, d. h. aus wenigen Messdaten, ermitteln. Wie oben bereits ausgeführt wurde, ermöglicht das erfindungsgemäße Verfahren eine sinnvolle Verwendung linearer Funktionen der Betriebsparameter zur Modellierung erwarteter Leistungsdichten aufgrund der erfindungsgemäßen frequenzbereichsspezifischen Auswertung der Vibrationsspektren. Eine weitere Ausgestaltung der Erfindung sieht vor, dass als Abweichungsmaß für jede Messzeit und jeden Frequenzbereich eine auf eine Standardnormalverteilung normierte Leistungsdichtedifferenz zwischen der aus den erfassten Vibrationen ermittelten mittleren Leistungsdichte und der erwarteten mittleren Leistungsdichte gebildet wird.

Auf eine Standardnormalverteilung normierte Abweichungsmaße ermöglichen vorteilhaft eine einfache und leicht verständliche Interpretation und Bewertung der Abweichungsmaße.

Dabei wird die normierte Leistungsdichtedifferenz für eine Messzeit und einen Frequenzbereich vorzugsweise gemäß

$$z_t^{(i)} = \frac{\delta_t^{(i)} - \mu_{t-1}^{(i)}}{\sigma_{t-1}^{(i)}}$$

aus einer Leistungsdichtedifferenz $\delta_t^{(i)}$ zwischen der mittleren Leistungsdichte, die aus den zu der Messzeit erfassten Vibrationen ermittelt wird, und der für die Messzeit erwarteten mittleren Leistungsdichte, einem geglätteten Erwartungswert $\mu_{t-1}^{(i)}$ der Leistungsdichtedifferenzen für eine der Messzeit vorangehende Messzeit und einer geglätteten Standardabweichung $\sigma_{t-1}^{(i)}$ der Leistungsdichtedifferenzen für die der Messzeit vorangehende Messzeit gebildet. Hierbei ist t ein Zeitindex, der die Messzeiten gemäß deren zeitlicher Reihenfolge nummeriert, und i ist ein Frequenzbereichsindex, der die Frequenzbereiche nummeriert.

Dadurch werden die Leistungsdichtedifferenzen $\delta_t^{(i)}$ jeweils zu standard-normalverteilten Leistungsdichtedifferenzen $z_t^{(i)}$ normiert, die jeweils eine Distanz zu ihrer eigenen Verteilung angeben. Anders ausgedrückt werden die Leistungsdichtedifferenzen $\delta_t^{(i)}$ dadurch zu statistischen Größen transformiert, die insbesondere die Nutzung üblicher Konfidenzintervalle der Standardnormalverteilung zur Interpretation und Bewertung der Leistungsdichtedifferenzen er-

möglichen.

Der geglättete Erwartungswert $\mu_t^{(i)}$ für eine Messzeit wird dabei vorzugsweise in Abhängigkeit von der Leistungsdichtedifferenz $\delta_t^{(i)}$ für diese Messzeit und dem geglätteten Erwartungswert $\mu_{t-1}^{(i)}$ für die der Messzeit vorangehende Messzeit gemäß

$$\mu_t^{(i)} = \lambda \delta_t^{(i)} + (1 - \lambda)\mu_{t-1}^{(i)}$$

gebildet, wobei $\lambda$ ein Glättungsparameter ist.

Ferner wird die geglättete Standardabweichung $\sigma_t^{(i)}$ für eine Messzeit in Abhängigkeit von der Leistungsdichtedifferenz $\delta_t^{(i)}$ und dem geglätteten Erwartungswert $\mu_t^{(i)}$ für diese Messzeit und der geglätteten Standardabweichung $\sigma_{t-1}^{(i)}$ für die der Messzeit vorangehende Messzeit gemäß

$$\left(\sigma_t^{(i)}\right)^2 = \lambda\left(\delta_t^{(i)} - \mu_t^{(i)}\right)^2 + (1 - \lambda)\left(\sigma_{t-1}^{(i)}\right)^2$$

gebildet, wobei $\lambda$ ein Glättungsparameter ist.

Die vorgenannten Ausgestaltungen der Erfindung ermöglichen vorteilhaft eine laufende gleitende Aktualisierung der zur Berechnung der normierten Leistungsdichtedifferenzen $z_t^{(i)}$ verwendeten Verteilungsparameter $\mu_t^{(i)}$ und $\sigma_t^{(i)}$ infolge deren rekursiven obigen Definitionen.

Der in den obigen Definitionen der Verteilungsparameter $\mu_t^{(i)}$ und $\sigma_t^{(i)}$ auftretende Glättungsparameter $A$ wird vorzugsweise gemäß

$$\lambda = 1 - \exp\left(\frac{-1}{\tau f_S}\right)$$

aus einer vorgebbaren Zeitkonstante $\tau$ und einer Abtastrate $f_S$ der Erfassung der Vibrationen der Maschine gebildet.

Dadurch wird eine exponentielle Glättung der Verteilungsparameter $\mu_t^{(i)}$ und $\sigma_t^{(i)}$ mit einer vorgebbaren Zeitkonstante $\tau$ erreicht. Insbesondere ermöglicht dies, möglicherweise entstehende Trendsignalkomponenten, die z. B. durch natürlichen Verschleiß verursacht werden und nur langsam fortschreiten, durch die Vorgabe einer ausreichend großen Zeitkonstante $\tau$ zu eliminieren bzw. zu unterdrücken. Signale zeitlich dazu relativ schnell entstehender Anomalien werden dadurch nicht beeinflusst.

Eine weitere Ausgestaltung der Erfindung sieht vor, dass ein Toleranzintervall für das Abweichungsmaß vorgegeben wird und für jede Messzeit und jeden Frequenzbereich ermittelt wird, ob das Abweichungsmaß innerhalb des vorgegebenen Toleranzintervalls liegt.

Das Toleranzintervall für das Abweichungsmaß liefert vorteilhaft ein quantitatives und automatisiert anwendbares Kriterium zur frequenzbereichsspezifischen Auswertung der mittleren Leistungsdichten für jede Messzeit.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1    ein Ablaufdiagramm einer Lernphase eines Verfahrens zur Überwachung einer Maschine,

FIG 2    Frequenzbereiche von Vibrationsfrequenzen,

FIG 3    ein Ablaufdiagramm einer Überwachungsphase eines Verfahrens zur Überwachung einer Maschine,

FIG 4    für eine Messzeit eine aus erfassten Vibrationen ermittelte mittlere Leistungsdichte und eine erwartete mittlere Leistungsdichte in Abhängigkeit von dem Frequenzbereich,

FIG 5    für einen Frequenzbereich eine Leistungsdichtedifferenz zwischen einer mittleren Leistungsdichte, die für eine Messzeit aus erfassten Vibrationen ermittelt wird, und einer für die Messzeit erwarteten mittleren Leistungsdichte sowie einen geglätteten Erwartungswert der Leistungsdichtedifferenzen in Abhängigkeit von der Messzeit,

FIG 6    für einen Frequenzbereich eine geglättete Standardabweichung der Leistungsdichtedifferenzen in Abhängigkeit von der Messzeit,

FIG 7    für einen Frequenzbereich eine normierte Leistungsdichtedifferenz in Abhängigkeit von der Messzeit.

Einander entsprechende Teile sind in allen Figuren mit den gleichen Bezugszeichen versehen.

Ein erfindungsgemäßes Verfahren zur Überwachung einer Maschine mit wenigstens einer rotierenden Maschinenkomponente, beispielsweise eines Getriebes, umfasst (wenigstens) eine Lernphase und (wenigstens) eine Überwachungsphase.

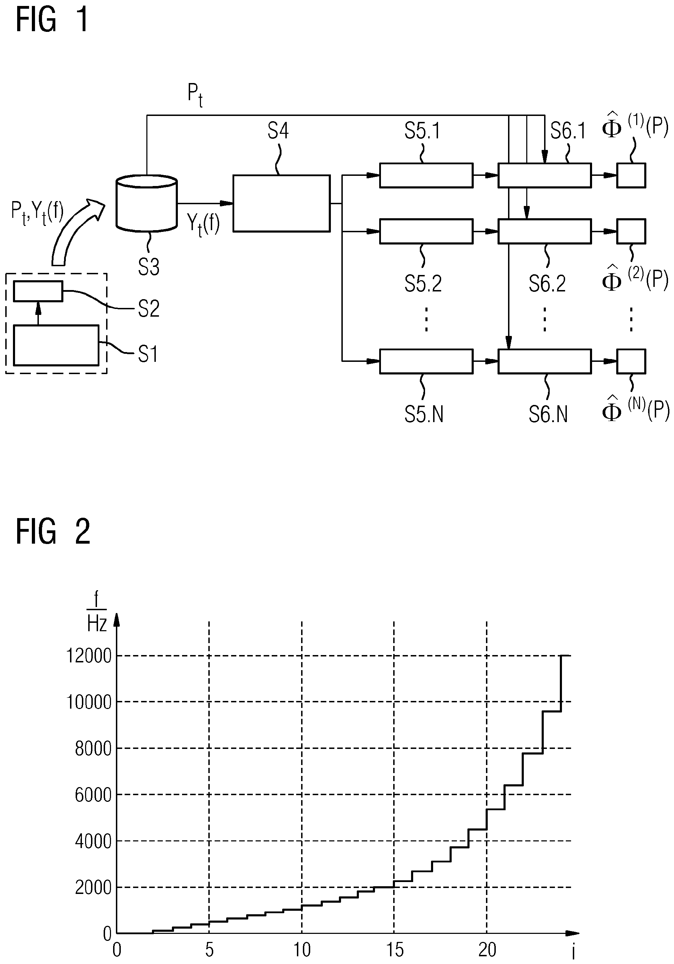

Figur 1 zeigt ein Ablaufdiagramm einer Lernphase des Verfahrens.

Während der Lernphase werden in einem Verfahrensschritt S1 zu aufeinander folgenden Messzeiten Parameterwerte $P_t$ von Betriebsparametern $P$ der Maschine und jeweils über eine vorgegebene Messdauer Vibrationen der Maschine erfasst (im Falle mehrerer Betriebsparameter bezeichnet $P_t$ ein Tupel von Messwerten). Hierbei ist t ein Zeitindex, der die Messzeiten gemäß deren zeitlicher Reihenfolge nummeriert. Als Betriebsparameter $P$ werden beispielsweise ein Drehmoment und/oder eine Drehzahl und/oder eine Temperatur der jeweiligen rotierenden Maschinenkomponente verwendet, deren Parameterwerte $P_t$ mittels entsprechender Sensoren erfasst werden. Die Vibrationen werden mittels wenigstens eines Vibrationssensors erfasst. Wenn die zu überwachende Maschine beispielsweise ein Getriebe mit einem Getriebelager oder mehreren Getriebelagern ist, wird z. B. für jedes Getriebelager ein Vibrationssensor an dem jeweiligen Getriebelager oder in dessen Nähe angeordnet.

Im Folgenden wird zur Vereinfachung der Beschreibung und Notation angenommen, dass nur ein Vibrationssensor vorhanden ist. In Fällen, in denen mehrere Vibrationssensoren vorhanden sind, werden die im Folgenden beschriebenen Verfahrensschritte für jeden Vibrationssensor separat ausgeführt.

In einem Verfahrensschritt S2 wird für jede Messdauer ein diskretes Vibrationsspektrum $Y_t(f)$ von Vibrationsamplituden Y in Abhängigkeit von Vibrationsfrequenzen f der während der Messdauer erfassten Vibrationen durch eine Fourier-Transformation, vorzugsweise durch eine schnelle Fourier-Transformation (Fast Fourier Transform), der Sensorsignale des jeweiligen Vibrationssensors ermittelt.

In einem Verfahrensschritt S3 werden die für die einzelnen Messzeiten erfassten Parameterwerte $P_t$ und Vibrationsspektren $Y_t(f)$ gespeichert, beispielsweise in einer Datenbank.

In einem Verfahrensschritt S4 werden aus jedem Vibrationsspektrum $Y_t(f)$ N Teilspektren gebildet, die jeweils Vibrationsamplituden eines Frequenzbereichs enthalten.

Figur 2 zeigt beispielhaft die Aufteilung von Vibrationsfrequenzen f zwischen 0 Hz und 12000 Hz auf mit einem Frequenzbereichsindex i nummerierte Frequenzbereiche (i=1,...,N), deren Breite mit zunehmender Vibrationsfrequenz f monoton zunimmt. Eine in Figur 2 dargestellte Zunahme der Breite der Frequenzbereiche mit zunehmender Vibrationsfrequenz f ist vorteilhaft, wenn der für die Überwachung der Maschine relevante Informationsgehalt der Vibrationsspektren mit zunehmenden Vibrationsfrequenzen f abnimmt, wie es häufig der Fall ist. In anderen Ausführungsbeispielen, in denen dies nicht der Fall ist, können die Frequenzbereiche auch anders verteilte, beispielsweise jeweils gleiche, Breiten haben und/oder sich gegenseitig überlappen.

In den Verfahrensschritten S5.1 bis S5.N wird jeweils für eines der N Teilspektren jedes Vibrationsspektrums $Y_t(f)$ eine mittlere Leistungsdichte $\Phi_t^{(i)}$ gemäß

$$\Phi_t^{(i)} = \frac{1}{L^{(i)}} \sum_{l=1}^{L^{(i)}} |Y_t(f_l)|^2 \qquad [1]$$

berechnet, wobei i der Frequenzbereichsindex ist, t der Zeitindex ist, l ein Frequenzindex ist, der die Vibrationsfrequenzen f des i.ten Teilspektrums, d. h. die in dem i.ten Frequenzbereich enthaltenen Vibrationsfrequenzen f des diskreten Vibrationsspektrums $Y_t(f)$, nummeriert, $L^{(i)}$ die Anzahl der Vibrationsfrequenzen f des i.ten Teilspektrums ist, und $Y_t(f_l)$ die für die Messzeit mit dem Zeitindex t und die Vibrationsfrequenz f mit dem Frequenzindex l des i.ten Teilspektrums ermittelte Vibrationsamplitude ist.

In Verfahrensschritten S6.1 bis S6.N wird für jeden Frequenzbereich aus den für diesen Frequenzbereich in den Verfahrensschritten S5.1 bis S5.N ermittelten mittleren Leistungsdichten $\Phi_t^{(i)}$ und den erfassten Parameterwerten $P_t$ eine Modellfunktion $\hat{\Phi}^{(1)}(P)$ bis $\hat{\Phi}^{(N)}(P)$ für eine erwartete über den Frequenzbereich gemittelte Leistungsdichte als eine Funktion der Betriebsparameter $P$ ermittelt. Beispielsweise wird dazu für jeden Frequenzbereich ein lineares multiples Regressionsmodell trainiert, welches als Modellfunktion $\hat{\Phi}^{(1)}(P)$ bis $\hat{\Phi}^{(N)}(P)$ eine lineare Funktion der Betriebsparameter $P$ mit Koeffizienten (Modellparametern), die in den Verfahrensschritten S6.1 bis S6.N der Lernphase ermittelt werden, liefert. Statt eines linearen multiplen Regressionsmodells kann auch ein kompliziertes Modell trainiert werden, das auch nicht-lineare Abhängigkeiten der Modellfunktion $\hat{\Phi}^{(1)}(P)$ bis $\hat{\Phi}^{(N)}(P)$ von den Betriebsparametern $P$ beschreibt.

Die für die verschiedenen Frequenzbereiche ermittelten Modellfunktionen $\hat{\Phi}^{(1)}(P)$ bis $\hat{\Phi}^{(N)}(P)$ werden jeweils gespeichert, um sie in der Überwachungsphase zu verwenden.

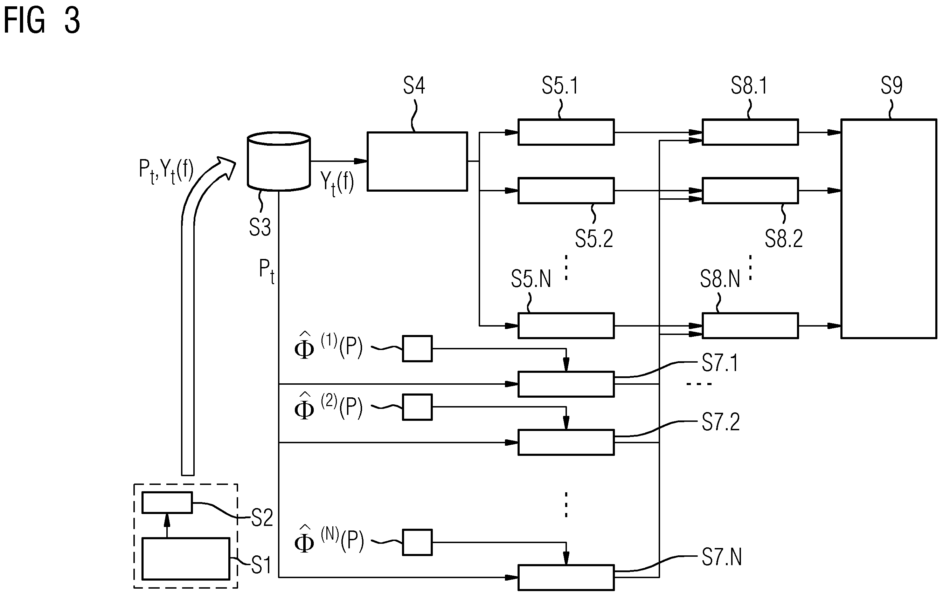

Figur 3 zeigt ein Ablaufdiagramm einer Überwachungsphase des Verfahrens.

Während der Überwachungsphase werden wie in der Lernphase die Verfahrensschritte S1 bis S5.N ausgeführt, wobei zu aufeinander folgenden Messzeiten der Überwachungsphase, beispielsweise periodisch, Parameterwerte $P_t$ der Betriebsparameter $P$ der Maschine und jeweils über eine Messdauer Vibrationen der Maschine erfasst werden und daraus für jede Messzeit und für dieselben Frequenzbereiche wie in der Lernphase jeweils eine mittlere Leistungsdichte $\Phi_t^{(i)}$ gemäß Gleichung [1] ermittelt wird.

Ferner wird in Verfahrensschritten S7.1 bis S7.N für jede Messzeit und jeden Frequenzbereich eine erwartete mittlere Leistungsdichte $\hat{\Phi}^{(i)}(P_t)$ als Funktionswert der in der Lernphase für den jeweiligen Frequenzbereich ermittelten Modellfunktion $\hat{\Phi}^{(1)}(P)$ bis $\hat{\Phi}^{(N)}(P)$ an der durch die zu der jeweiligen Messzeit erfassten Parameterwerte $P_t$ definierten Stelle gebildet.

In Verfahrensschritten S8.1 bis S8.N wird für jede Messzeit und jeden Frequenzbereich ein Abweichungsmaß für die Abweichung der aus den erfassten Vibrationen ermittelten mittleren Leistungsdichte $\Phi_t^{(i)}$ von der erwarteten mittleren Leistungsdichte $\hat{\Phi}^{(i)}(P_t)$ gebildet.

Als Abweichungsmaß wird dabei beispielsweise jeweils eine auf eine Standardnormalverteilung normierte Leistungsdichtedifferenz $z_t^{(i)}$ gemäß

$$z_t^{(i)} = \frac{\delta_t^{(i)} - \mu_{t-1}^{(i)}}{\sigma_{t-1}^{(i)}} \qquad [2]$$

gebildet. Dabei bezeichnen $\delta_t^{(i)}$ eine gemäß

$$\delta_t^{(i)} = \Phi_t^{(i)} - \hat{\Phi}^{(i)}(P_t) \qquad [3]$$

gebildete Leistungsdichtedifferenz zwischen der aus den erfassten Vibrationen ermittelten mittleren Leistungsdichte $\Phi_t^{(i)}$ und der erwarteten mittleren Leistungsdichte $\hat{\Phi}^{(i)}(P_t)$, $\mu_t^{(i)}$ einen geglätteten Erwartungswert, der für eine Messzeit in Abhängigkeit von der Leistungsdichtedifferenz $\delta_t^{(i)}$ für diese Messzeit, dem geglätteten Erwartungswert $\mu_{t-1}^{(i)}$ für die der Messzeit vorangehende Messzeit und einem Glättungsparameter $\lambda$ gemäß

$$\mu_t^{(i)} = \lambda \delta_t^{(i)} + (1 - \lambda)\mu_{t-1}^{(i)} \qquad [4]$$

gebildet wird, und $\sigma_t^{(i)}$ eine geglättete Standardabweichung, die für eine Messzeit in Abhängigkeit von der Leistungsdichtedifferenz $\delta_t^{(i)}$ und dem geglätteten Erwartungswert $\mu_t^{(i)}$ für diese Messzeit sowie der geglätteten Standardabweichung $\sigma_{t-1}^{(i)}$ für die der Messzeit vorangehende Messzeit und dem gemäß Glättungsparameter $A$ gemäß

$$\left(\sigma_t^{(i)}\right)^2 = \lambda\left(\delta_t^{(i)} - \mu_t^{(i)}\right)^2 + (1-\lambda)\left(\sigma_{t-1}^{(i)}\right)^2 \qquad [5]$$

gebildet wird. Dabei wird der Glättungsparameter $\lambda$ gemäß

$$\lambda = 1 - \exp\left(\frac{-1}{\tau\, f_S}\right) \qquad [6]$$

aus einer vorgebbaren Zeitkonstante $\tau$ und einer Abtastrate $f_S$ der Erfassung der Vibrationen der Maschine (d. h. dem Kehrwert $f_S$ der Differenz zweier aufeinander folgender Messzeiten) gebildet. Anfangswerte für den geglätteten Erwartungswert und die geglättete Standardabweichung werden beispielsweise aus den während der Lernphase ermittelten mittleren Leistungsdichten $\Phi_t^{(i)}$ bestimmt.

Gleichung [1] normiert die Leistungsdichtedifferenzen $\delta_t^{(i)}$ jeweils auf standard-normalverteilte normierte Leistungsdichtedifferenzen $z_t^{(i)}$, die jeweils eine Distanz zu ihrer eigenen Verteilung angeben. Anders ausgedrückt werden die Leistungsdichtedifferenzen $\delta_t^{(i)}$ dadurch zu statistischen Größen transformiert, so dass übliche Konfidenzintervalle der Standardnormalverteilung zu ihrer Interpretation genutzt werden können. Die zur Berechnung der normierten Leistungsdichtedifferenzen $z_t^{(i)}$ verwendeten Verteilungsparameter $\mu_t^{(i)}$ und $\sigma_t^{(i)}$ werden mittels rekursiver exponentieller Glättung gemäß den Gleichungen [4] bis [6] laufend adaptiv ermittelt.

Neben der klaren statistischen Interpretierbarkeit der normierten Leistungsdichtedifferenzen $z_t^{(i)}$ der verschiedenen Frequenzbereiche ermöglicht das Verfahren vorteilhaft so genanntes Detrending zur Eliminierung unerwünschter Auswirkungen von Langzeittrends auf die Ergebnisse. Beispielsweise können möglicherweise entstehende Trendsignalkomponenten, die z. B. durch natürlichen Verschleiß verursacht werden und nur langsam fortschreiten, durch Subtraktion der gleitenden geglätteten Erwartungswerte $\mu_{t-1}^{(i)}$ von den Leistungsdichtedifferenzen $\delta_t^{(i)}$ in Gleichung [1] mittels einer Vorgabe einer ausreichend großen Zeitkonstante $\tau$ eliminiert werden. Signale zeitlich dazu relativ schnell entstehender Anomalien werden dadurch nicht beeinflusst.

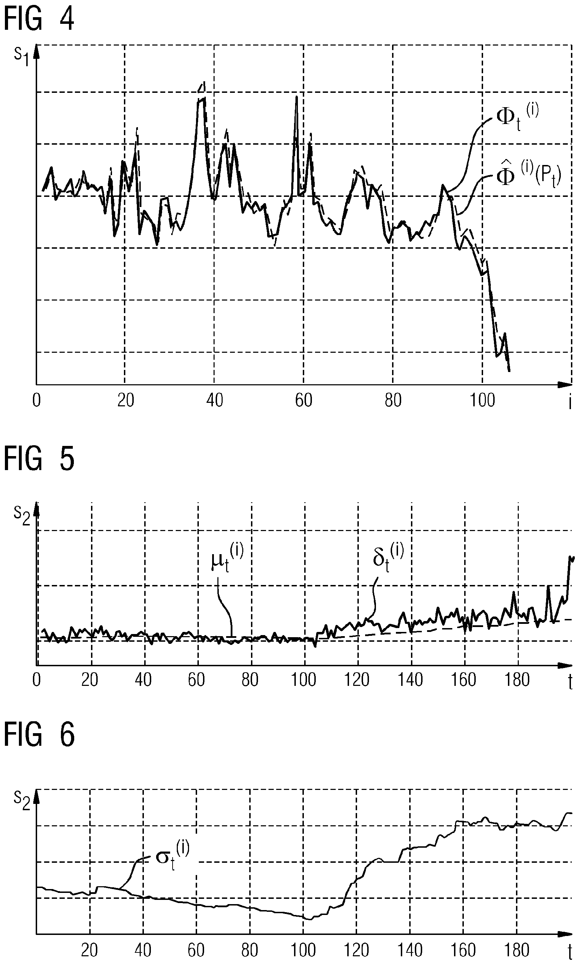

Figur 4 zeigt beispielhaft für eine Messzeit mit dem Zeitindex t eine aus erfassten Vibrationen ermittelte mittlere Leistungsdichte $\Phi_t^{(i)}$ und eine erwartete mittlere Leistungsdichte $\hat{\Phi}^{(i)}(P_t)$ in Abhängigkeit von dem Frequenzbereich, wobei $\Phi_t^{(i)}$ und $\hat{\Phi}^{(i)}(P_t)$ gemäß einer geeignet gewählten logarithmischen Skala $s_1$ dargestellt sind.

Die Figuren 5 und 6 zeigen beispielhaft für einen Frequenzbereich mit dem Frequenzbereichsindex i eine Leistungsdichtedifferenz $\delta_t^{(i)}$ und einen entsprechenden geglätteten Erwartungswert $\mu_t^{(i)}$ (Figur 5) sowie eine entsprechende geglättete Standardabweichung $\sigma_t^{(i)}$ (Figur 6) in Abhängigkeit von dem Zeitindex t der Messzeiten auf einer geeignet gewählten Skala $S_2$.

In einem Verfahrensschritt S9 werden die in den Verfahrensschritten S8.1 bis S8.N gebildeten Abweichungsmaße ausgewertet.

Dazu wird beispielsweise ein Toleranzintervall T für die in den Verfahrensschritten S8.1 bis S8.N gebildeten Abweichungsmaße vorgegeben und für jede Messzeit und jeden Frequenzbereich wird ermittelt, ob das jeweilige Abweichungsmaß innerhalb des vorgegebenen Toleranzintervalls T liegt.

Im Falle, dass die Abweichungsmaße jeweils als eine gemäß den Gleichungen [2] bis [6] normierte Leistungsdichtedifferenz $z_t^{(i)}$ gebildet werden, wird als Toleranzintervall T ein geeignetes Konfidenzintervall der Standardnormalverteilung, beispielsweise ein $3\sigma$-Konfidenzintervall, vorgegeben, und im Verfahrensschritt S9 wird für jede Messzeit und jedes Frequenzintervall ein binäres Ausgangssignal $\gamma_t^{(i)}$ erzeugt, welches den Wert Null annimmt, wenn die jeweilige normierte Leistungsdichtedifferenz $z_t^{(i)}$ innerhalb des vorgegebenen Toleranzintervalls liegt, und andernfalls den Wert Eins annimmt. Im Falle eines als $3\sigma$-Konfidenzintervall der Standardnormalverteilung vorgegebenen Toleranzintervalls T wird das binäre Ausgangssignal $\gamma_t^{(i)}$ für die Messzeit mit dem Zeitindex t und das Frequenzintervall mit dem Frequenzbereichsindex i also gemäß

$$\gamma_t^{(i)} = \begin{cases} 1 & \textit{falls } |z_t^{(i)}| \geq 3\sigma \\ 0 & \textit{falls } |z_t^{(i)}| < 3\sigma \end{cases} \qquad [7]$$

gebildet, wobei $\sigma$ die Standardabweichung der Standardnormalverteilung ist.

Dadurch werden pro Messzeit für jeden Vibrationssensor N binäre Ausgangssignale $\gamma_t^{(i)}$ erzeugt, die zur Überwachung der Maschine ausgewertet werden können, beispielsweise indem aus den binären Ausgangssignalen $\gamma_t^{(i)}$ ein Gesamtausgabesignal gebildet wird und/oder sie auf geeignete Weise visualisiert werden.

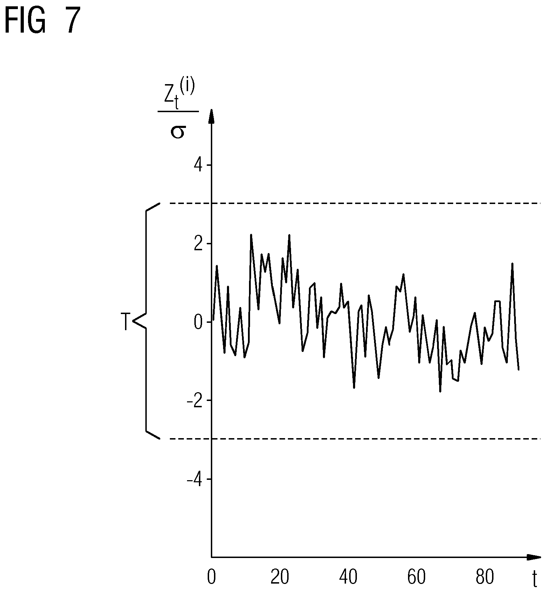

Figur 7 zeigt beispielhaft für einen Frequenzbereich mit dem Frequenzbereichsindex i eine normierte Leistungsdichtedifferenz $z_t^{(i)}$ in Einheiten der Standardabweichung $\sigma$ der Standardnormalverteilung in Abhängigkeit von dem Zeitindex t der Messzeiten. Beispielhaft ist ferner als Toleranzintervall T das $3\sigma$-Konfidenzintervall der Standardnormalverteilung dargestellt. In dem dargestellten Beispiel verläuft die normierte Leistungsdichtedifferenz $z_t^{(i)}$ in dem dargestellten Zeitintervall innerhalb des Toleranzintervalls T.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Überwachung einer Maschine mit einer rotierenden Maschinenkomponente, wobei automatisiert

- zu aufeinander folgenden Messzeiten Parameterwerte ($P_t$) von Betriebsparametern der Maschine und jeweils über eine vorgegebene Messdauer Vibrationen der Maschine erfasst werden,
- für jede Messdauer ein Vibrationsspektrum ($Y_t(f)$) von Vibrationsamplituden in Abhängigkeit von Vibrationsfrequenzen ($f$) der während der Messdauer erfassten Vibrationen ermittelt wird,

**dadurch gekennzeichnet, dass**

- aus dem Vibrationsspektrum ($Y_t(f)$) für mehrere Frequenzbereiche jeweils eine mittlere Leistungsdichte $\left( \Phi_t^{(i)} \right)$ des Vibrationsspektrums ($Y_t(f)$) ermittelt wird,
- während einer mehrere Messzeiten umfassenden Lernphase aus den für diese Messzeiten ermittelten mittleren Leistungsdichten $\left( \Phi_t^{(i)} \right)$ und erfassten Parameterwerten ($P_t$) für jeden Frequenzbereich eine Modellfunktion ($\hat{\Phi}^{(1)}(P)$ bis $\hat{\Phi}^{(N)}(P)$) für eine erwartete über den Frequenzbereich gemittelte Leistungsdichte als eine lineare Funktion der Betriebsparameter ermittelt wird, indem ein lineares multiples Regressionsmodell zur Schätzung der Modellfunktion ($\hat{\Phi}^{(1)}(P)$ bis $\hat{\Phi}^{(N)}(P)$) trainiert wird,
- und während einer Überwachungsphase für jede Messzeit und jeden Frequenzbereich ein Abweichungsmaß für eine Abweichung der aus den erfassten Vibrationen ermittelten mittleren Leistungsdichte $\left( \Phi_t^{(i)} \right)$ von einer erwarteten mittleren Leistungsdichte ($\hat{\Phi}^{(i)}(P_t)$) gebildet wird,
- wobei die für eine Messzeit und einen Frequenzbereich erwartete mittlere Leistungsdichte ($\hat{\Phi}^{(i)}(P_t)$) als Funktionswert der in der Lernphase für den Frequenzbereich ermittelten Modellfunktion ($\hat{\Phi}^{(1)}(P)$ bis $\hat{\Phi}^{(N)}(P)$) an der durch die zu der jeweiligen Messzeit erfassten Parameterwerte ($P_t$) definierten Stelle gebildet wird.

**2.** Verfahren nach Anspruch 1,
**dadurch gekennzeichnet, dass** die Maschine ein Getriebe ist.

**3.** Verfahren nach einem der vorhergehenden Ansprüche,
**dadurch gekennzeichnet, dass** als Betriebsparameter ein Drehmoment und/oder eine Drehzahl und/oder eine Temperatur einer rotierenden Maschinenkomponente der Maschine verwendet werden.

**4.** Verfahren nach einem der vorhergehenden Ansprüche,
**dadurch gekennzeichnet, dass** eine Breite der Frequenzbereiche mit zunehmender Vibrationsfrequenz ($f$) monoton zunimmt.

**5.** Verfahren nach einem der vorhergehenden Ansprüche,
**dadurch gekennzeichnet, dass** als Abweichungsmaß für jede Messzeit und jeden Frequenzbereich eine auf eine Standardnormalverteilung normierte Leistungsdichtedifferenz $\left( z_t^{(i)} \right)$ für eine Messzeit und einen Frequenzbereich gemäß

$$z_t^{(i)} = \frac{\delta_t^{(i)} - \mu_{t-1}^{(i)}}{\sigma_{t-1}^{(i)}}$$

aus einer Leistungsdichtedifferenz $\left( \delta_t^{(i)} \right)$ zwischen der mittleren Leistungsdichte $\left( \Phi_t^{(i)} \right)$, die aus den zu der Messzeit erfassten Vibrationen ermittelt wird, und der für die Messzeit erwarteten mittleren Leistungsdichte ($\hat{\Phi}^{(i)}(P_t)$), einem geglätteten Erwartungswert $\left( \mu_t^{(i)} \right)$ der Leistungsdichtedifferenzen $\left( \delta_t^{(i)} \right)$ für eine der Messzeit vorangehende Messzeit und einer geglätteten Standardabweichung $\left( \sigma_t^{(i)} \right)$ der Leistungsdichtedifferenzen $\left( \delta_t^{(i)} \right)$ für die der Messzeit vorangehende Messzeit gebildet wird.

**6.** Verfahren nach Anspruch 5,
**dadurch gekennzeichnet, dass** der geglättete Erwartungswert $\left( \mu_t^{(i)} \right)$ für eine Messzeit in Abhängigkeit von der Leistungsdichtedifferenz $\left( \delta_t^{(i)} \right)$ für diese Messzeit und dem geglätteten Erwartungswert $\left( \mu_t^{(i)} \right)$ für die der Messzeit vorangehende Messzeit gemäß

$$\mu_t^{(i)} = \lambda\delta_t^{(i)} + (1-\lambda)\mu_{t-1}^{(i)}$$

gebildet wird, wobei $\lambda$ ein Glättungsparameter ist.

**7.** Verfahren nach Anspruch 5 oder 6,
**dadurch gekennzeichnet, dass** die geglättete Standardabweichung $\left( \sigma_t^{(i)} \right)$ für eine Messzeit in Abhängigkeit von der Leistungsdichtedifferenz $\left( \delta_t^{(i)} \right)$ und dem geglätteten Erwartungswert $\left( \mu_t^{(i)} \right)$ für diese Messzeit und der geglätteten Standardabweichung $\left( \sigma_t^{(i)} \right)$ für die der Messzeit vorangehende Messzeit gemäß

$$\left(\sigma_t^{(i)}\right)^2 = \lambda\left(\delta_t^{(i)} - \mu_t^{(i)}\right)^2 + (1-\lambda)\left(\sigma_{t-1}^{(i)}\right)^2$$

gebildet wird, wobei $\lambda$ ein Glättungsparameter ist.

**8.** Verfahren nach einem der Anspruch 6 oder 7,
**dadurch gekennzeichnet, dass** der Glättungsparameter gemäß

$$\lambda = 1 - \exp\left(\frac{-1}{\tau f_S}\right)$$

aus einer vorgebbaren Zeitkonstante $\tau$ und einer Abtastrate $f_S$ der Erfassung der Vibrationen der Maschine gebildet wird.

9. Verfahren nach einem der vorhergehenden Ansprüche, **dadurch gekennzeichnet, dass** ein Toleranzintervall (T) für das Abweichungsmaß vorgegeben wird und für jede Messzeit und jeden Frequenzbereich ermittelt wird, ob das Abweichungsmaß innerhalb des vorgegebenen Toleranzintervalls (T) liegt.

**Claims**

1. Method for the monitoring of a machine with a rotating machine component, wherein in an automated manner

   - at successive measurement times parameter values ($P_t$) of operating parameters of the machine and in each case over a predefined measurement duration vibrations of the machine are recorded,
   - for each measurement duration a vibration spectrum ($Y_t(f)$) of vibration amplitudes is determined depending on vibration frequencies ($f$) of the vibrations recorded during the measurement duration,

   charcterised in that

   - a mean power density $(\Phi_t^{(i)})$ of the vibration spectrum ($Y_t(f)$) is in each case determined from the vibration spectrum ($Y_t(f)$) for a multiplicity of frequency ranges,
   - during a learning phase comprising a multiplicity of measurement times, for each frequency range a model function ($\hat{\Phi}^{(1)}(P)$ to $\hat{\Phi}^{(N)}(P)$) is determined from the mean power densities ($\Phi_t^{(i)}$) established for these measurement times and recorded parameter values ($P_t$) for an expected power density averaged over the frequency range as a linear function of the operating parameters, by a linear multiple regression model being trained for estimation of the model function ($\hat{\Phi}^{(1)}(P)$ to $\hat{\Phi}^{(N)}(P)$),
   - and during a monitoring phase for each measurement time and each frequency range a deviation measure is formed for a deviation of the mean power density $(\Phi_t^{(i)})$ established from the recorded vibrations from an expected mean power density ($\hat{\Phi}^{(i)}(P_t)$),
   - wherein for a measurement time and a frequency range the expected mean power density ($\hat{\Phi}^{(i)}(P_t)$) is formed as a function value of the model function ($\hat{\Phi}^{(1)}(P)$ to $\hat{\Phi}^{(N)}(P)$) established in the learning phase for the frequency range at the point defined by the parameter values ($P_t$) recorded at the respective measurement time.

2. Method according to claim 1,
   **characterised in that** the machine is a transmission.

3. Method according to one of the preceding claims,
   **characterised in that** a torque and/or a rotational speed and/or a temperature of a rotating machine component of the machine are used as operating parameters.

4. Method according to one of the preceding claims,
   **characterised in that** a width of the frequency ranges grows monotonously with increasing vibration frequency ($f$).

5. Method according to one of the preceding claims,
   **characterised in that** as a deviation measure for each measurement time and each frequency range a power density difference $(z_t^{(i)})$ normalised to a standard normal distribution for a measurement time and a frequency range is formed according to

$$z_t^{(i)} = \frac{\delta_t^{(i)} - \mu_{t-1}^{(i)}}{\sigma_{t-1}^{(i)}}$$

from a power density difference ( $\delta_t^{(i)}$ ) between the mean power density ( $\Phi_t^{(i)}$ ), which is determined from the vibrations recorded at the measurement time, and the mean power density ($\hat{\Phi}^{(i)}(P_t)$) expected for the measurement time, a smoothed expected value ( $\mu_t^{(i)}$ ) of the power density differences ( $\delta_t^{(i)}$ ) for a measurement time preceding the measurement time and a smoothed standard deviation ( $\sigma_t^{(i)}$ ) of the power density differences ( $\delta_t^{(i)}$ ) for the measurement time preceding the measurement time.

6. Method according to claim 5,

   **characterised in that** the smoothed expected value ( $\mu_t^{(i)}$ ) for a measurement time is formed depending on the power density difference ( $\delta_t^{(i)}$ ) for this measurement time and the smoothed expected value ( $\mu_t^{(i)}$ ) for the measurement time preceding the measurement time according to

   $$\mu_t^{(i)} = \lambda \delta_t^{(i)} + (1 - \lambda)\mu_{t-1}^{(i)},$$

   wherein $\lambda$ is a smoothing parameter.

7. Method according to claim 5 or 6,

   **characterised in that** the smoothed standard deviation ( $\sigma_t^{(i)}$ ) for a measurement time is formed depending on the power density difference ( $\delta_t^{(i)}$ ) and the smoothed expected value ( $\mu_t^{(i)}$ ) for this measurement time and the smoothed standard deviation ( $\sigma_t^{(i)}$ ) for the measurement time preceding the measurement time according to

   $$\left(\sigma_t^{(i)}\right)^2 = \lambda\left(\delta_t^{(i)} - \mu_t^{(i)}\right)^2 + (1 - \lambda)\left(\sigma_{t-1}^{(i)}\right)^2,$$

   wherein $\lambda$ is a smoothing parameter.

8. Method according to one of the claims 6 or 7,
   **characterised in that** the smoothing parameter is formed according to

   $$\lambda = 1 - \exp\left(\frac{-1}{\tau f_s}\right)$$

   from a predefinable time constant $\tau$ and a sampling rate $f_s$ of the recording of the vibrations of the machine.

9. Method according to one of the preceding claims,
   **characterised in that** a tolerance interval (T) for the deviation measure is predefined and for each measurement time and for each frequency range it is determined whether the deviation measure lies within the predefined tolerance interval (T).

## Revendications

1. Procédé de contrôle d'une machine ayant un composant tournant, dans lequel, d'une manière automatisée

- à des temps de mesure successifs, on relève des valeurs ($P_t$) de paramètres de fonctionnement de la machine et, respectivement, sur une durée de mesure donnée à l'avance, des vibrations de la machine,
- pour chaque durée de mesure, on détermine un spectre ($Y_t(f)$) de vibration, d'amplitudes des vibrations en fonction des fréquences ($f$) des vibrations relevées pendant la durée de mesure,

**caractérisé en ce que**

- à partir du spectre ($Y_t(f)$) de vibration, on détermine, pour plusieurs domaines de fréquences, respectivement, une densité $\left(\Phi_t^{(i)}\right)$ de puissance moyenne du spectre ($Y_t(f)$) de vibration,
- pendant une phase d'apprentissage, comprenant plusieurs temps de mesure, on détermine, à partir des densités $\left(\Phi_t^{(i)}\right)$ de puissance moyenne déterminées pendant ces temps de mesure et des valeurs ($P_t$) de paramètres relevées pour chaque domaine de fréquences, une fonction ($\hat{\phi}^{(1)}(P)$ à $\hat{\phi}^{(N)}(P)$) de modèle pour une densité de puissance escomptée et moyennée sur le domaine de fréquences sous la forme d'une fonction linéaire des paramètres de fonctionnement, en apprenant à un modèle de régression multiple linéaire à estimer la fonction ($\hat{\phi}^{(1)}(P)$ à $\hat{\phi}^{(N)}(P)$) de modèle,
- et, pendant une phase de contrôle, on forme, pendant chaque temps de mesure et pour chaque domaine de fréquences, une valeur d'un écart de la densité $\left(\Phi_t^{(i)}\right)$ de puissance moyenne déterminée à partir des vibrations relevées à une densité ($\hat{\phi}^{(1)}(P_t)$) de puissance moyenne escomptée,
- dans lequel on forme la densité ($\hat{\phi}^{(1)}(P_t)$) de puissance moyenne escomptée pendant un temps de mesure et pour un domaine de fréquences sous la forme d'une valeur de la fonction ($\hat{\phi}^{(1)}(P)$ à $\hat{\phi}^{(N)}(P)$) de modèle déterminée dans la phase d'apprentissage pour le domaine de fréquences, en la position définie par les valeurs ($P_t$) de paramètres relevées aux temps de mesure respectifs.

2. Procédé suivant la revendication 1,
   **caractérisé en ce que** la machine est une transmission.

3. Procédé suivant l'une des revendications précédentes,
   **caractérisé en ce que** l'on utilise, comme paramètres de fonctionnement, un couple et/ou une vitesse de rotation et/ou une température d'un composant tournant de la machine.

4. Procédé suivant l'une des revendications précédentes,
   **caractérisé en ce qu'**une largeur des domaines de fréquence augmente d'une manière monotone au fur et à mesure qu'augmente la fréquence ($f$) des vibrations.

5. Procédé suivant l'une des revendications précédentes,
   **caractérisé en ce que** l'on forme, comme valeurs d'un écart, pendant chaque temps de mesure et pour chaque domaine de fréquences, une différence $\left(z_t^{(i)}\right)$ de densité de puissance normée sur une distribution normale standard pendant un temps de mesure et dans un domaine de fréquences selon

$$z_t^{(i)} = \frac{\delta_t^{(i)} - \mu_{t-1}^{(i)}}{\sigma_{t-1}^{(i)}}$$

à partir d'une différence $\left(\delta_t^{(i)}\right)$ de densité de puissance entre la densité $\left(\Phi_t^{(i)}\right)$ de puissance moyenne, qui est déterminée à partir des vibrations relevées au temps de mesure, et la densité ($\hat{\phi}^{(1)}(P_t)$) de puissance moyenne

escomptée pendant le temps de mesure, d'une valeur $\left(\mu_t^{(i)}\right)$ escomptée lissée des différences $\left(\delta_t^{(i)}\right)$ de densité de puissance, pendant un temps de mesure précédant le temps de mesure, et d'un écart-type $\left(\sigma_t^{(i)}\right)$ lissé des différences $\left(\delta_t^{(i)}\right)$ de densité de puissance, pendant le temps de mesure précédant le temps de mesure.

**6.** Procédé suivant la revendication 5,

**caractérisé en ce que** l'on forme la valeur $\left(\mu_t^{(i)}\right)$ escomptée lissée pendant un temps de mesure, en fonction de la différence $\left(\delta_t^{(i)}\right)$ de densité de puissance pendant ce temps de mesure, et de la valeur $\left(\mu_t^{(i)}\right)$ escomptée lissée pendant le temps de mesure précédant le temps de mesure selon

$$\mu_t^{(i)} = \lambda\delta_t^{(i)} + (1 - \lambda)\mu_{t-1}^{(i)}$$

$\lambda$ étant un paramètre de lissage.

**7.** Procédé suivant la revendication 5 ou 6,

**caractérisé en ce que** l'on forme l'écart-type $\left(\sigma_t^{(i)}\right)$ lissé pendant un temps de mesure, en fonction de la différence $\left(\delta_t^{(i)}\right)$ de densité de puissance et de la valeur $\left(\mu_t^{(i)}\right)$ escomptée lissée pendant ce temps de mesure, et de l'écart-type $\left(\sigma_t^{(i)}\right)$ lissé pendant le temps de mesure précédant le temps de mesure selon

$$\left(\sigma_t^{(i)}\right)^2 = \lambda\left(\delta_t^{(i)} - \mu_t^{(i)}\right)^2 + (1 - \lambda)\left(\sigma_{t-1}^{(i)}\right)^2$$

$\lambda$ étant un paramètre de lissage.

**8.** Procédé suivant la revendication 6 ou 7,
**caractérisé en ce que** l'on forme le paramètre de lissage selon

$$\lambda = 1 - \exp\left(\frac{-1}{\tau\,f_s}\right)$$

à partir d'une constante $\tau$ de temps pouvant être donnée à l'avance et d'un taux $f_s$ d'échantillonnage du relevé des vibrations de la machine.

**9.** Procédé suivant l'une des revendications précédentes,
**caractérisé en ce que** l'on donne à l'avance un intervalle (T) de tolérance pour la valeur de l'écart et on détermine, pendant chaque temps de mesure et dans chaque domaine de fréquences, si la valeur de l'écart se trouve dans l'intervalle (T) de tolérance donné à l'avance.

FIG 1

FIG 2

FIG 3

## FIG 4

$\Phi_t^{(i)}$

$\hat{\Phi}^{(i)}(P_t)$

## FIG 5

$\mu_t^{(i)}$

$\delta_t^{(i)}$

## FIG 6

$\sigma_t^{(i)}$

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050119840 A1
- EP 2626682 A1
- EP 1014054 A2
- US 5602761 A

**In der Beschreibung aufgeführte Nicht-Patentliteratur**

- **P. J. TAVNER.** Review of condition monitoring of rotating electrical machines. *IET Electric Power Applications,* 2008, vol. 2 (4), 215-247
- **W. J. WANG et al.** Early detection of gear failure by vibration analysis - I. Calculation of the time-frequency distribution. *Mechanical Systems and Signal Processing,* 1993, vol. 7 (3), 193-203
- **W. BARTELMUS et al.** A new feature for monitoring the condition of gearboxes in non-stationary operating conditions. *Mechanical Systems and Signal Processing,* 2009, vol. 23, 1528-1534